(19) Europäisches Patentamt
European Patent Office
Office européen des brevets

(11) **EP 4 765 076 A1**

(12) **EUROPEAN PATENT APPLICATION**

(43) Date of publication:
24.06.2026  Bulletin 2026/26

(21) Application number: 25224665.7

(22) Date of filing: 17.12.2025

(51) International Patent Classification (IPC):
G09B 9/16 (2006.01)        G09B 9/28 (2006.01)
G09B 9/44 (2006.01)        G09B 9/18 (2006.01)
B64C 13/04 (2006.01)

(52) Cooperative Patent Classification (CPC):
G09B 9/44; B64C 13/02; B64C 13/04;
B64C 13/0421; B64C 13/06; B64C 13/503;
B64C 27/56; B64D 31/00; B64D 31/04;
B64D 31/12; B64D 35/08; B64D 43/00;
B64D 45/00; G09B 9/18; G09B 9/28

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 20.12.2024  FR 2414983

(71) Applicant: Daher Aerospace
94310 Orly (FR)

(72) Inventors:
• ROBIN, Christophe
  94310 ORLY (FR)
• LABEDAN, Guillaume
  94310 ORLY (FR)

(74) Representative: Hamann, Jean-Christophe
H&I Partners France
25, Allée Cavalière
44500 La Baule (FR)

(54) **SYSTEM FOR MIMICKING THE BEHAVIOR OF A MULTI-ENGINE AIRCRAFT WITH A SINGLE ENGINE AIRCRAFT**

(57)    A fly-by-wire system that lets a single-engine aircraft mimic multi-engine behavior for real-flight pilot training, especially asymmetric thrust effects that create yaw/roll. A cockpit central thrust control with two independent thrust levers generates an overall power command plus a dissymmetry signal; a calculator applying a dedicated control law converts these into corrected setpoints for the rudder, left/right ailerons, and propeller parameters to reproduce multi-engine handling. Instructors may trigger a simulated engine failure and then reset back to normal single-engine operation. Optional wingtip electric thrusters powered by a battery may increase asymmetric effects while maintaining safety margin, and the system may display/record simulated multi-engine data for debriefing-reducing training cost and $CO_2$ versus operating real twins

FIG. 1

EP 4 765 076 A1

## Description

## Technical field

The present disclosure relates generally to fly-by-wire controls and more specifically to system, method and apparatuses for mimicking the behavior of a multi-engine aircraft with a single-engine aircraft.

## Background art

Fly-by-wire enables the aerodynamic surfaces and engines of an aircraft to be piloted according to some actions of the pilot on the control devices such as throttle control, broomstick, rudder pedals and/or other control devices without direct mechanical link, such as cables, between these control devices and the controlled means.

An action of the pilot on a control member is measured, for example by means of a position sensor, this measurement is interpreted by a calculator, which transcribes this action into a set of orders sent to actuators acting on aerodynamic surfaces or engines according to a control law.

This control law aims to optimize the operation of the aircraft and its safety by maintaining it in its flight envelope.

Depending on the aircraft, several control laws may be used and selected, for example depending on the flight phase, so that the same action on one or more control devices may result in different movements from the actuators taken individually or in combination.

Thus, the selection of a control law makes it possible to completely alter the behavior of an aircraft in response to a control setpoint entered by the pilot via the control devices.

Even if fundamentally changing the behavior of the aircraft is not the aim of fly-by-wire, there are examples that may lean toward such objective.

For example, document WO 2021/224490A1 describes a multi-propeller aircraft comprising a plurality of electric motors on each wing, whose control devices are those of a single-engine aircraft, featuring a single thrust controller, and whose calculators associated with the fly-by-wire controls reproduce the behavior of a single-engine aircraft.

Document WO 2008/097319A2 discloses an aircraft with fly-by-wire controls whose calculator may generate a plurality of simulated control signals from at least one aircraft control device without direct pilot intervention.

The training and the qualification of pilots on a multi-engine aircraft are expensive because such an aircraft exhibits high operating and maintenance costs.

Such training includes learning to react and to follow protocols in the event of a damage resulting in a dissymmetrical behavior, particularly in case of an engine failure.

Such a damage mainly translates in yaw and roll responses of the aircraft the combination of which may lead to a behavior that may destabilize the pilot up to the loss of control of the aircraft.

As of today, for exposing an apprentice pilot to such a type of unusual behavior, the solution is either a simulator or the use of a twin-engine aircraft voluntarily set under such dissymmetrical condition, the latter having a cost as well as a high carbon footprint, since the operation of a twin-engine aircraft is of financial and carbon emission costs which are 2 to 3 times higher than those of a single-engine aircraft.

In addition, generating a dissymmetrical situation, for instance by voluntarily stopping one of the engines of a twin-engine aircraft presents risks, even in the presence of a flight instructor, the aircraft may become unstable and unrecoverable in the case of an inappropriate maneuver by the student pilot.

## Summary

The described techniques relate to methods, system, device and apparatus that support techniques for mimicking the behavior of a multi-engine aircraft with a single engine aircraft. Some implementations may provide a system for mimicking the behavior of a multi-engine aircraft with a single-engine aircraft including an aircraft comprising an on-board cockpit comprising at least one control device, a main thruster and a fly-by-wire control center configured to move at least one aerodynamic surface among a rudder, a right-wing aileron and a left-wing aileron in response to an action on the at least one control device. The fly-by-wire control center may be further configured to modify at least one operating parameter of the main thruster in response to an action on the at least one control device, the control device may comprise a central thrust control comprising two independent thrust levers, configured to issue a power control signal and a dissymmetry signal based on an average angular position and a difference in angular position between the two independent thrust levers. The fly-by-wire control center may comprise at least one calculator comprising an input port configured to receive a power control signal and a dissymmetry signal, a non-volatile memory comprising a control law and a computer program configured to process the power control signal and the dissymmetry signal an to issue at least one of a corrected left wing aileron position setpoint signal, a corrected right wing aileron position setpoint signal, a corrected rudder position setpoint signal, a corrected propeller speed setpoint signal and a corrected propeller pitch setpoint signal. The control law and the computer program may be configured to mimic the behavior of an aircraft comprising more than one main thruster.

Thus, the use of a specific control law for the piloting of the main thruster and aerodynamic surfaces according to the pilot's actions on the control devices, makes it possible to make the single-engine aircraft behave similar to a multi-engine aircraft, and in particular to mimic a dissymmetry in propulsion.

The main thruster may be a turboprop for reliability. In some implementations the system may comprise an auxiliary electric thruster on each wing and the calculator and control law are configured to process at least one operating parameter relating to each auxiliary electric thruster.

The control device may comprise an engine failure simulation command configured to trigger a mimicked aircraft behavior subject to an engine failure and may further comprise a reset command configured to exit the mimicked behavior.

The fly-by-wire control center may comprise a secondary fly-by-wire device including a database comprising the control law of the mimicked aircraft, a memory comprising the computer program for processing signals arriving on the input port. The processing may be implemented by a dissymmetry processing component, a power control component, a display component, a recording component, and a resetting component.

In some implementation, the two independent thrust levers of the central thrust control may act on a power control shaft of the main thruster via a differential gear train comprising a left sun-gear connected to a left-hand thrust lever, a right sun-gear connected to a right hand thrust lever, a planetary gear geared with the left sun-gear and the right sun-gear and held by a planet carrier, the power control shaft being connected in rotation with the planet carrier. The planetary gear may be connected in rotation with a dissymmetry shaft, an angular position of the dissymmetry shaft being set by the difference in angular positions of the two independent thrust levers and measured by a dissymmetry shaft angular sensor issuing the dissymmetry signal. The central thrust control may comprise a left sun-gear angular position sensor and a right sun-gear angular position sensor. The display component may be configured to generate a signal towards an engine gauges display showing the thrust power of a left engine and a thrust power of a right engine according to angular positions delivered by the left sun-gear angular position sensor and the right sun-gear angular position sensor. The recording component may be configured to record timestamped positions of left-hand thrust lever and of the right-hand thrust lever from angular positions delivered by the left sun-gear angular position sensor and the right sun-gear angular position sensor.

The system may be implemented in a method for adapting a single-engine aircraft for operating like a multi-engine aircraft, which may comprise steps of installing on the single-engine aircraft at least one supplementary fly-by-wire controlled aerodynamic surface. The method may further comprise a step of installing a secondary fly-by-wire control device comprising a control law and configured to control the at least one fly-by-wire controlled supplementary aerodynamic surface. In some implementation the method may further comprise a step of installing a central thrust control comprising two independent thrust levers configured to issue a power control signal and a dissymmetry signal based on an average angular position and a difference in angular position between the two independent thrust levers. The secondary fly-by-wire control device may be configured to issue at least one of a corrected propeller speed setpoint signal, a corrected propeller pitch setpoint signal, a corrected aileron position setpoint signal and a corrected rudder position signal from the power control signal and the dissymmetry signal. In some implementation the method may comprise a step of installing auxiliary electric thrusters at wing tips of the single-engine aircraft wherein the operating conditions of the auxiliary electric thrusters are controlled by the secondary fly-by-wire control device based on the power control signal and the dissymmetry signal.

**Brief description of the drawings**

FIG. 1 represents an example of an aircraft which supports techniques for implementing a system for mimicking the behavior of a multi-engine aircraft with a single-engine aircraft in accordance with various aspects of the present disclosure.

FIG. 2 is a schematic view in perspective of an example of a cockpit of a single-engine aircraft which supports techniques for implementing a system for mimicking the behavior of a multi-engine aircraft with a single-engine aircraft in accordance with various aspects of the present disclosure.

FIG. 3 is an example of a kinematic diagram of a central thrust control which supports techniques for implementing a system for mimicking the behavior of a multi-engine aircraft with a single-engine aircraft in accordance with various aspects of the present disclosure.

FIG. 4 is a simplified functional diagram of a primary and secondary electrical control device of a single-engine aircraft which supports techniques for implementing a system for mimicking the behavior of a multi-engine aircraft with a single-engine aircraft in accordance with various aspects of the present disclosure.

FIG. 5 is a flow chart of a method for upgrading a single-engine aircraft to an aircraft which supports techniques for implementing a system for mimicking the behavior of a multi-engine aircraft according to various aspects of the disclosure.

FIG. 6 is a diagrammatic representation of an apparatus which supports techniques for implementing a system for mimicking the behavior of a multi-engine aircraft with a single-engine aircraft in accordance with various aspects of the present disclosure.

**Detailed description**

A system, device, method and apparatus are described for enabling a single-engine aircraft to mimic the behavior of a multi-engine aircraft for the purpose of training pilot students to operate a multi-engine aircraft in real flight conditions.

Compared to a real multi-engine aircraft, the system of the disclosure may provide at least one of the following advantages:

reducing the pilot training costs by using an aircraft of a simpler configuration, i.e. single-engine instead of multi-engine;

reducing the $CO_2$ impact of training flights by at least 50% at equivalent flight time;

improving the aerodynamic efficiency of the aircraft compared to a multi-engine for non-dissymmetric flights;

improving safety and reducing the risk of loss of control, particularly in simulated engine failure situations;

enabling ground flight analysis insofar as all orders go through a calculator for all simulated functions and all control and dissymmetry data can be recorded;

simulating on the same basis other motorization cases, the same single-engine aircraft may be used for single-engine, twin-engine and four-engine aircrafts training.

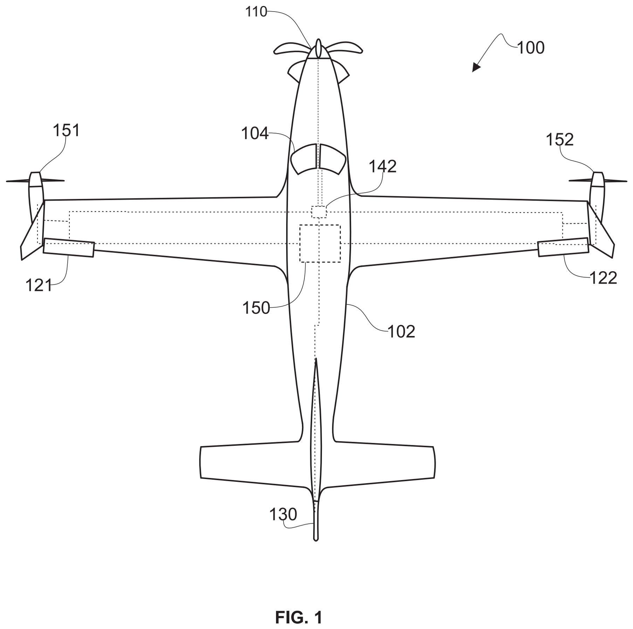

FIG.1 shows a system diagram (100) which supports techniques for mimicking the behavior of a multi-engine aircraft with a single-engine aircraft in accordance with various aspects of the present disclosure. As depicted in FIG. 1 the system diagram (100) may include an aircraft (102), comprising a cockpit (104), a main thruster (110), a rudder (130), a left-wing aileron (121) a right-wing aileron (122),a flight-by-wire control center (142), a battery (150), a left side auxiliary electric thruster (151), a right side auxiliary electric thruster (152) and/or other components.

The aircraft (102) may be a single-engine fixed-wing aircraft which, in nominal operation, is propelled by a single main thruster (110) which may be a turboprop.

The aircraft may be an existing single-engine aircraft with primary electrical controls or not, which may receive specific arrangements which enables to generate a dissymmetric behavior.

For example, these arrangements may include aerodynamic surfaces such as ailerons (121, 122) on each of the wings which may generate a roll effect and a rudder (130) which may generate a yaw effect.

The fly-by-wire control center (142) may receive information from the control devices of the cockpit (104) and translate such information in setpoints for the operation of the main thruster (110), the left-wing aileron (121), the right-wing aileron (122), the rudder (130) and /or other components.

The fly-by-wire control center (142) may be already present in the aircraft or may be added specifically to provide the functions required by the techniques for mimicking the behavior of a multi-engine aircraft with a single-engine aircraft, if the original single-engine aircraft is not fly-by-wire.

For instance, the ailerons and the rudder may be those of the existing aircraft, they may also be aerodynamic extensions attached to existing surfaces to increase their effects, or, in particular when the aircraft is not fly-by-wire controlled, they may be added aerodynamic surfaces which are electrically controlled by the fly-by-wire control center (142)

Alternatively, or additionally to the aerodynamic extensions, the aircraft may comprise a battery (150) and auxiliary electric thrusters (151, 152) that may be installed, for example, at the wings tips and supplied in energy by the battery.

The battery (150) may be of the Li-ion -Nickel-Manganese-Cobalt type, the Li-ion-Nickel-Cobalt-Aluminum type, the Li-ion-Lithium-Iron-Phosphate type, the solid state type, or any other battery technology adapter to supply the requested power to the auxiliary electric thrusters (151, 152) under a voltage comprised in 400V to 1000V.

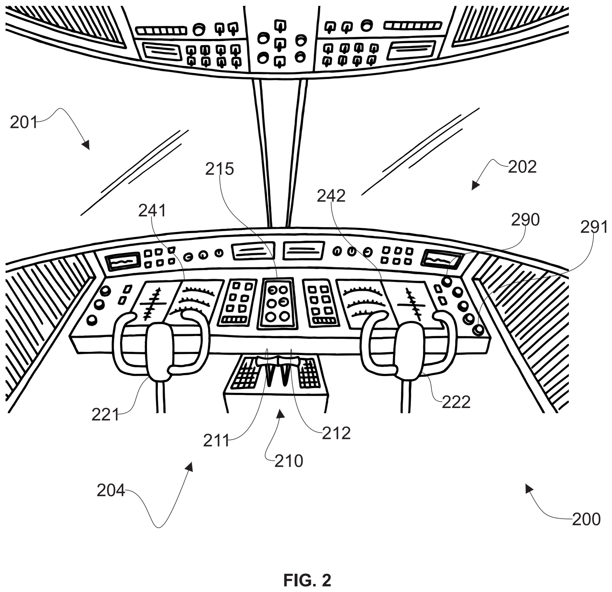

FIG. 2 shows a cockpit diagram (200) of an aircraft comprising a system which supports techniques for mimicking the behavior of a multi-engine aircraft with a single-engine aircraft in accordance with various aspects of the present disclosure. As depicted in FIG. 2 the cockpit diagram may comprise an onboard cockpit (204), a pilot seat (201), a flight instructor seat (202), a pilot computer screen (241), a flight instructor computer screen (242), and engine gauges display (215), a pilot broomstick (221), a flight instructor broomstick (222), a central thrust control (210) comprising a left-hand thrust lever (211) and a right-hand thrust ever (212), an engine failure simulation command (290), a reset command (291), and/or other components notably rudder pedals (not shown) on the pilot side and on the flight instructor side.

The control devices: broomsticks (221, 222), central thrust control (210), rudder pedals and other control devices may comprise one or more position sensors, for example one or more incremental encoders. The position information of a control devices is interpreted by a calculator of the fly-by-wire control center (142) and translated in movement orders to the aerodynamic surfaces, either existing aerodynamic surfaces or fly-by-wire additional aerodynamic surfaces according to a command law in a fly-by-wire control device.

The parameters of the main engine may be set according to a function of the relative position of the two independent thrust levers (211, 212), according to an average angular position and a difference in angular position of the thrust levers.

The control of the main thruster (110) through the central thrust control (210) may be purely electric for example according to information delivered by one or more encoders measuring the position of each independent thrust lever, then performing a mathematical processing of this information, or, according to another example, the main thruster control may, at least in part, be based on a mechanical device using, for example, a differential gear train as described below, which acts on an existing control in place of the single-lever control of the main thruster, or, by a combination of these embodiments.

Thus, by maneuvering the central thrust control (210) with two independent thrust levers, the pilot student reproduces thrust and drag effects similar to those of a twin-engine.

The onboard cockpit (204) may be of a single-engine aircraft, that is to say the pilot and the flight instructor actually fly in the aircraft mimicking the behavior of a multi-engine aircraft, the controlled aerodynamic surfaces are subject to an aerodynamic flow and produce lifts and drags, the electrical controls modify the actual flight conditions: It is not a ground flight simulator.

The engine failure simulation command (290) may be activated by the flight instructor and may trigger a corresponding behavior of the aircraft. When activating the engine failure simulation command (290) the power of the main thruster is reduced by half and the controls of the aerodynamic surfaces are adjusted to reproduce the effect of such a failure on the yaw and roll of the aircraft.

The reset command (291) may allow the flight instructor to exit the simulated behavior mode and to return to a symmetrical, single-engine behavior.

The flight instructor may select different modes for the engine gauges display (215): either a single-engine display, with a gauge per parameter corresponding to the actual operating parameters of the main thruster, or a simulated twin-engine display with gauges for each engine parameters based, in particular, on a power control signal issued from the central thrust control (210).

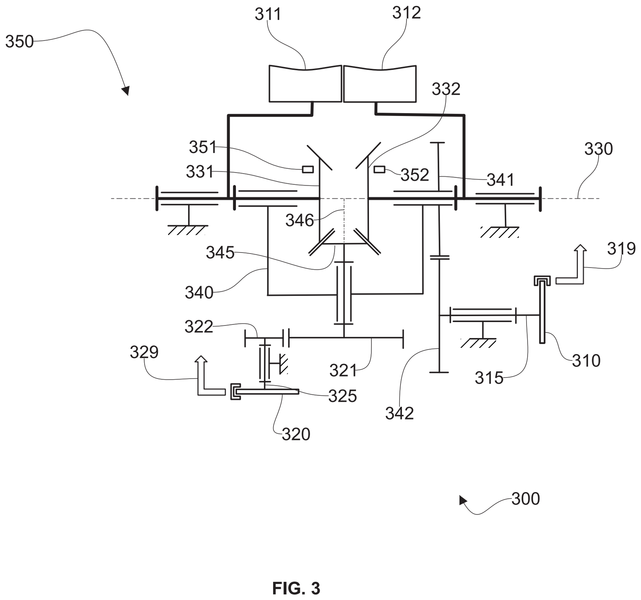

FIG. 3 shows embodiment diagram (300) of a central thrust control adapted to a system which supports techniques for mimicking the behavior of a multi-engine aircraft with a single-engine aircraft in accordance with various aspects of the present disclosure. As depicted in FIG. 3 such an embodiment diagram (300) comprises a central thrust control(350) comprising a left-hand thrust lever (311) and a right-hand thrust lever (312), a power control shaft (315), a power control shaft gear train (341, 342), a control shaft angle sensor (310), a thruster power signal (319), a sun-gear axis (330), a left sun-gear (331), a right sun-gear (332), a planetary gear (345), a planetary spinning axis (346), a planet carrier (340), a dissymmetry control shaft (325), a dissymmetry control shaft gear train (321, 322), a dissymmetry shaft angular sensor (320), a dissymmetry signal (329), an left sun-gear angular position sensor (351), a right sun-gear angular position sensor (352) and/or other components.

The central thrust control (350) as well as the left-hand thrust lever (311) and the right-hand thrust lever (312) may be the same as or similar to the central thrust control (210), the left-hand thrust lever (211) and the right-hand thrust lever (212) as depicted in FIG. 2.

The left sun-gear (331) is connected to the left-hand thrust lever (311) and rotates around the sun-gear axis (330) when the right-hand thrust lever is maneuvered, symmetrically, the right sun-gear (332) is connected to the right-hand thrust lever (312) and rotates about the sun-gear axis when the left-hand thrust lever is maneuvered. Both sun-gears are geared with the planetary gear (345) which may spin about the planetary spinning axis (346) and which is held by the planet carrier (340) which may rotate about the sun-gear axis (330), a set comprising the two sun-gears (331, 332) the planetary gear (345) and the planet carrier (340) making a differential gear train.

The two thrust levers (311, 312) may be moved angularly and independently of each other around the sun-gear axis (330) thus reproducing the configuration of a twin-engine aircraft central thrust control, where each thrust lever controls the power of one of the aircraft engines.

If the two thrust levers (311, 312) are moved angularly together by a same angle around the sun-gear axis (330), the two sun-gears (331, 332) rotates together, the planetary gear (345) does not spin, and the planet carrier (340) rotates around the sun-gear axis by the same angle. The rotational displacement of the planet carrier (340) is transmitted to the power control shaft (315) via the control shaft gear train (341, 342) causing the power control shaft to rotate by an angle proportional to the same angle according to the control shaft gear train gear ratio. The angular displacement of the power control shaft may be measured by the control shaft angle sensor (310) which issues a power control signal (319), which may be analog or digital for controlling the power of the main thruster of the aircraft. The control shaft angle sensor (310) may be an incremental encoder that delivers a power control signal (319) proportional to the angular position of the power control shaft (315).

The power control signal (319) may be interpreted by a calculator of the fly-by-wire control device of the main thruster, commonly referred to as *"FADEC"* for *"Full Authority Digital Engine Control"* and translated to thrust conditions to be applied to the main thruster. The FADEC may control multiple parameters of the main thruster such as an engine regime, a propeller pitch etc. and/ or other parameters.

When the two independent thrust levers (311, 312) are moved together about the sun-gear axis (330) by an $\alpha$ angle, then the angular displacement of the first gear (341) of the control shaft gear train is also $\alpha$. The rotation angle of the power control shaft (315) is proportional to $\alpha$ depending on the gear ratio of the control shaft gear train.

Since the planetary gear (345) does not spin in such a configuration, the dissymmetry control shaft (325) does not spin either, therefore, when the two thrust levers are moved together by a same angle, the aerodynamic surfaces position is not changed in response to these thrust levers maneuver.

In another configuration, if one of the thrust levers, for instance the left-hand thrust lever (311) is moved angularly by an angle around the sun-gear axis (330) while the other thrust lever, the right-hand thrust lever (312) in this example, remains still, the left sun-gear (331) rotates by the angle while the right sun-gear does not move. In a twin-engine aircraft, such a configuration may result in a dissymmetry in the thrust power delivered by the engines.

The rotation of the left sun-gear (331) will cause both the planetary gear (345) to spin about the planetary spinning axis (346) by a spinning angle proportional to the angle according to a gear ratio between the left sun-gear (331) and the planetary gear (345), and the planet carrier to rotate around the sun-gear axis (330) by planet carrier angle proportional to a gear ratio between the planetary gear (345) and the right sun-gear (332).

If , for example, the respective number of teeth $Z_i$ are such that:

$$Z_{332} = Z_{331} = 2.Z_{345}$$

$$Z_{341} = Z_{342}$$

Then, in this example, the gear ratio between the left sun-gear (331) and the planetary gear (345) is 2 and the gear ratio between the planetary gear (345) and the right sun-gear (332) is ½. Then, for an angular displacement $\delta$ of one of the two thrust levers relative to the other, the angular displacement of the first gear (341) of the control shaft gear train driven by the planet carrier (340) is $\delta/2$, the angular displacement of the power control shaft (315) is proportional to $\delta/2$ depending on the gear ratio of the control shaft gear train.

The power control signal (319) is proportional to an angular average position and a difference in angular positions of the two independent thrust levers. The power requested from the main thruster via this mechanism corresponds to the sum of the powers that would be requested from two thrusters, given the position of two levers on a twin-engine.

The spinning angle of the planetary gear (345) about the planetary spinning axis (346) and will rotate the dissymmetry control shaft (325) by a dissymmetry angle proportional to the angle, the proportionality being given by the gear ratio of the dissymmetry control shaft gear train (321, 322). The rotation angle of the dissymmetry control shaft (325) may be measured by the dissymmetry shaft angular sensor (320), which issues a dissymmetry signal (329) that may further be interpreted to generate an order for moving the aerodynamic surfaces of the aircraft and to reproduce the aerodynamic effects of the thrust dissymmetry.

For instance, if the right-hand thrust lever (312) is pushed forward and the left-hand thrust lever (311) is pulled completely backward, then the position of the control shaft angle sensor (310) of the power control shaft (315) is half-course of the power control signal (319) leads the FADEC to operate the main thruster at half-power. The position of the dissymmetry control shaft (325) is such that the dissymmetry signal (329) leads the fly-by-wire control of the rudder and ailerons such that the aircraft experience a yaw to the left and a roll by an elevation of the right wing.

The combination of the power control of the main thruster and of the aerodynamic surfaces by the differential gear train makes it possible to mimic the behavior of a twin-engine aircraft, although the aircraft is actually a single-engine aircraft.

The left sun-gear angular position sensor (351) and the right sun-gear angular position sensor (352), deliver information about the angular position of each thrust lever, such information may be used to display engines operation in the engine gauges display (215) and to record flight parameters as if the aircraft was a multi-engine aircraft.

The central thrust control may comprise a locking device for locking together the two independent thrust levers, which, when engaged, prevents any relative movement of one thrust lever relative to the other. In such conditions, the thrust control acts on the power control shaft (315) of the main thruster as the single lever of a single-engine aircraft.

The calculator may comprise safety features so that the triggering of such a virtual failure, but with actual effects, or inappropriate action of the student pilot facing this situation are recorded, for example for the purpose of reporting a training session, but do not lead to too an unstable behavior of the aircraft.

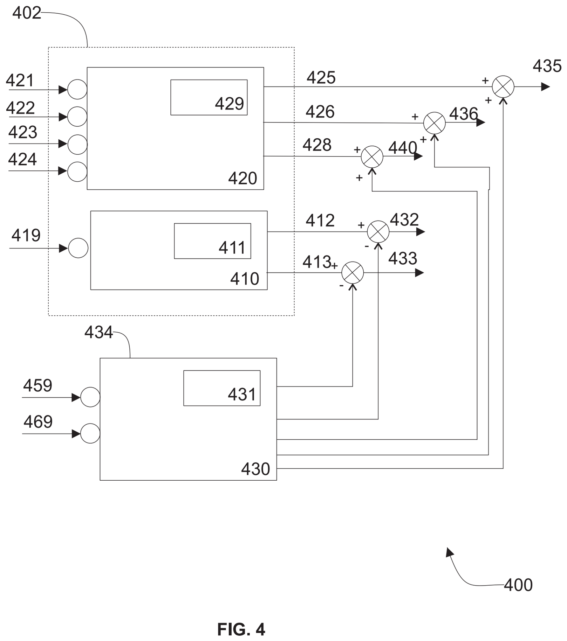

FIG. 4 shows a fly-by-wire control center diagram (400) adapted to a system which supports techniques for mimicking the behavior of a multi-engine aircraft with a single-engine aircraft in accordance with various aspects of the present disclosure. As depicted in FIG. 4 the fly-by-wire control center diagram (400) may comprise a primary fly-by-wire control device (402), a first calculator (410) a first non-volatile memory (411), a propeller speed setpoint signal (412), a propeller pitch setpoint signal (413), a main thruster control signal (419), a second calculator (420), a second non-volatile memory (429) a pilot broomstick signal (421), a flight instructor broomstick signal (422), a pilot rudder pedals position signal (423), a flight instructor rudder-pedals position signal (424), a left-wing aileron position setpoint signal (425), a right wing aileron position setpoint signal (426), a rudder position setpoint signal (428), a secondary fly-by-wire control device (434), a third calculator (430), a third non-volatile memory (431), a corrected left wing aileron position setpoint signal (435), a corrected right wing aileron position setpoint signal (436), a corrected rudder position setpoint signal (440), a corrected propeller speed setpoint signal (432), a corrected propeller pitch setpoint signal (433), a power control signal (459), a dissymmetry signal (469) and/or other components. The flight-by-wire control center may be the same as or similar to the fly-by-wire control center (142) depicted in FIG 1. The power control signal (459) and the dissymmetry signal (469) may be the same as or similar to the power control signal (319) and the dissymmetry signal (329) as depicted in FIG. 3.

The primary fly-by-wire control device (402) may comprise a first calculator (410) processing the engine parameters of the main thruster, comprising a non-volatile memory (411) comprising a control law and a computer program to generate, for example, a propeller speed setpoint, and a propeller pitch setpoint based on at least one signal from a main thruster power control signal (419) issued by a sensor.

The primary flight-by-wire control device (402) may comprise a second calculator (420) comprising a second non-volatile memory (429) comprising a control law and a computer program processing the control of aerodynamic surfaces according to at least one of a pilot broomstick signal (421), a flight instructor broomstick signal (422), a pilot rudder pedals position signal (423), a flight instructor rudder-pedals position signal (424) issued by sensors measuring the positions of these control devices.

The primary fly-by-wire control device may issue, based on the aforementioned input signals, at least one of a left-wing aileron position setpoint signal (425), a right-wing aileron position setpoint signal (426), a rudder position setpoint signal (428), a propeller speed setpoint signal (412), a propeller pitch setpoint signal (413).

The primary fight-by-wire control device (402) may be a fly-by-wire control center already present in the aircraft.

However, as previously stated, it is not necessary for primary controls, in conventional single-engine mode, to be fly-by-wire, these can be of any kind: for example, by cables or hydraulics, provided the aerodynamic surfaces configured to generate dissymmetry are fly-by-wire.

The secondary fly-by-wire control device (434) may be an addon to provide the functions adapted to techniques for mimicking the behavior of a multi-engine aircraft with a single-engine aircraft. The secondary fly-by-wire control device (434) may comprise an input port for receiving a power control signal (459) and a dissymmetry signal (469), a third calculator (430), a third non-volatile memory (431) comprising a control law and a computer program for calculating corrections to at least one of a left wing aileron position setpoint signal (425), a right wing aileron position setpoint signal (426), a rudder position setpoint signal (428), a propeller speed setpoint signal (412), a propeller pitch setpoint signal (413), calculated / issued by the primary fly-by-wire control device (402), and/or other components.

The corrections are based on input signals comprising the power control signal (459) and the dissymmetry signal (469). These signals may be generated by the central thrust control, the engine failure simulation command (290) or the reset command (291).

As a result, at least one the left wing aileron position setpoint signal (425), the right wing aileron position setpoint signal (426), the rudder position setpoint signal (428), the propeller speed setpoint signal (412), the propeller pitch setpoint signal (413) are modified before being sent to the main thruster, ailerons and rudder in at least one of a corrected left wing aileron position setpoint signal (435), a corrected right wing aileron position setpoint signal (436), a corrected rudder position setpoint signal (440), a corrected propeller speed setpoint signal (432), a corrected propeller pitch setpoint signal (433), to produce or reset a dissymmetric behavior of a multi-engine aircraft, in terms of yaw, roll and propelling power.

The person skilled in the art understands that the implementation described by considering multiple calculators may be achieved with a single calculator comprising, in a memory, instructions for performing the same functions.

Returning to FIG. 1, the system which supports techniques for mimicking the behavior of a multi-engine aircraft with a single-engine aircraft may comprise a left side auxiliary electric thruster (151), a right side auxiliary electric thruster (152), attached to the wing tips, and supplied in energy by an onboard battery (150) and/or an auxiliary power unit, commonly referred to by APU.

Their spinning speeds and the pitch of the driven propellers may be precisely controlled by the primary fly-by-wire calculator control device according to operating instructions which may also be modified / corrected by the secondary fly-by-wire control device for providing dissymmetry effect.

Located at the ends of the wings, the thrust or drag of these auxiliary engines benefits from a high lever arm to create yaw and roll effects as part of the generation of dissymmetry, which allows, for equal effect, to reduce the power of these engines compared to a real twin-engine aircraft.

Thus, to mimic the dissymmetric behavior of a twin-engine aircraft of 2 times 500 hp (2 times 368 kW), it is possible to use a single-engine aircraft with a main thruster of 120 hp (88.3 kW) and two auxiliary engines, one on each wing end, having a cumulative power of around 100 hp (73.6 kW).

Typically, auxiliary electric motors are powered by a voltage comprised between 400 volts and 1000 volts

The power of auxiliary electric thrusters may be significantly lower than that of the main thruster, but they may introduce greater dissymmetry effects or simulated power variations without lowering the power of the main thruster and thus maintaining a certain safety margin.

Although the above examples are limited to the case of a twin-engine mimicked aircraft by a system comprising a single-engine aircraft, the person skilled in the art understands that these principles may be applied regardless of the number of engines of the mimicked aircraft, for example, three-engine or four-engine.

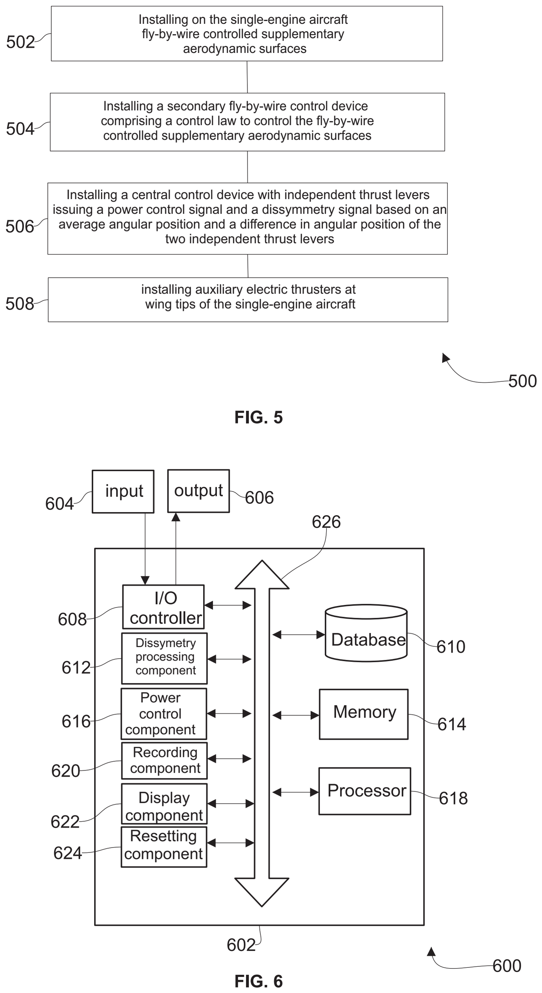

FIG. 5 shows a flowchart (500) illustrating a method for making a single-engine aircraft that may mimic the behavior of a multi-engine aircraft, notably for pilot training purposes, in accordance with various aspects of the present disclosure. The operation of the method may implement techniques, devices and systems as disclosed herein.

At 502 supplementary fly-by-wire controlled aerodynamic surfaces may be installed on a single-engine aircraft. In some implementations the modified single engine aircraft may not be initially equipped with fly-by-wire therefore these additional surfaces may be controlled by an added fly-by-wire control device, or, the single-engine aircraft is already fly-by-wire and the supplementary aerodynamic surfaces may extend existing aerodynamic surfaces to increase their effect.

At 504 a secondary fly-by-wire control device comprising a dedicated control law may be installed for driving the supplementary aerodynamic surfaces and the aircraft engine. When the aircraft is already equipped initially with fly-by-wire, the secondary fly-by-wire control may be interfaced with the existing primary fly-by-wire control device.

At 506 a central thrust control with two independent thrust levers and comprising means for generating a power control signal and a dissymmetry signal according to an average angular position and a difference in angular position of the two thrust levers may be installed in the cockpit. Such a central thrust control may be the same as or similar to the central thrust control (350) disclosed herein.

At 508 the method may optionally comprise installing auxiliary electric thrusters at the wing tips and a battery to supply these thrusters in energy. The operation of the auxiliary thrusters may be driven by the secondary fly-by-wire device.

FIG. 6 shows a diagram (600) of an apparatus (602) supporting techniques for mimicking the behavior of a multi-engine aircraft with a single-engine aircraft in accordance with various aspects of the present disclosure. The apparatus (602) may be the same as or similar to the secondary fly-by-wire control device (434) depicted in FIG.4. The apparatus may include components for bidirectional communication comprising an I/O controller (608), a database (610), a dissymmetry processing component (612), a memory (614), a power control component (616), a processor (618), a recording component (620), a display component (622), a resetting component (624) and/or other components. These components may be in electronic communication via one or more buses (626).

The I/O controller (608) may manage input signals arriving on an input port (604) and output signals delivered on an output port (606) for the apparatus (602), The I/O controller (608) may also manage peripherals not integrated in the apparatus (602). In some cases, the I/O controller (608) may represent a physical connection or a port to an external peripheral. For instance, the I/O controller (608) may connect the apparatus (602) to an existing primary fly-by-wire control device (402) and/or to one or more added displays (215, 241, 242) in the cockpit.

The input signals arriving on the input port (604) may comprise a power control signal (459), a dissymmetry signal (469), an engine failure simulation signal from the engine failure simulation command (290), a resetting signal from the reset command (291), a left sun-gear angular position sensor (351) signal, a right sun-gear angular position sensor (352) signal, as well as other information taken from the fly-by-wire control device (402) such as broomsticks positions, rudder pedals position and/or from specific sensors of the aircraft such as speed, altitude, landing gear configuration, aerodynamic surfaces positions such as ailerons, rudder, slats, elevators, flaps, information related the main thruster such as rpm and propeller pitch, and when applicable, information related to auxiliary electric thrusters operation and other information.

The database comprises a control law defining a safe flight domain of the mimicked aircraft according to flight parameters and controls.

Memory (614) may include random-access memory (RAM) and read-only memory (ROM). The memory (614) may store computer-readable, computer-executable software including instructions that, when executed, cause the processor to perform various functions described herein. In some cases, the memory (614) may contain, among other things, a basic input/output system (BIOS) which may control basic hardware or software operation such as the interaction with peripheral components or devices.

The memory (614) may also store timestamped flight parameters and controls configuration of the mimicked aircraft in connection with the recording component (620) thus allowing analysis and debriefing after a pilot training session.

The processor (618) may include an intelligent hardware device, (e.g., a general-purpose processor, a DSP, a central processing unit (CPU), a microcontroller, an ASIC, an FPGA, a programmable logic device, a discrete gate or transistor logic component, a discrete hardware component, or any combination thereof). In some cases, the processor (618) may be configured to operate a memory array using a memory controller. In other cases, a memory controller may be integrated into the processor (618). The processor (618) may be configured to execute computer-readable instructions stored in a memory (614) to perform various functions (e.g., functions or tasks supporting mimicking the behavior of a multi-engine aircraft with a single-engine aircraft).

The dissymmetry processing component (612) may be configured or otherwise support means for interpreting a dissymmetry signal (469) issued by the central thrust control(350) and/or by the engine failure simulation command (290) to generate at least one of a corrected left wing aileron position setpoint signal (435), a corrected right wing aileron position setpoint signal (436), a corrected rudder position setpoint signal (440), and, when applicable, setpoint signals for the auxiliary electric thrusters in connection with the power control component, according to the control law. The dissymmetry processing component (612) in connection with the control law comprised in the database (610) may limit those setpoints in order to keep the aircraft in its safe flight domain.

The power control component (616) may be configured or otherwise support means for interpreting a power control signal (459) issued by the central thrust control(350) and/or by the engine failure simulation command (290) to generate, a corrected propeller speed setpoint signal (432), a corrected propeller pitch setpoint signal (433) and, when applicable, signals for controlling the operation of auxiliary electric thrusters, in connection with the power control component, according to the control law. The dissymmetry processing component (612) in connection with the control law comprised in the database (610) may limit those setpoints in order to keep the aircraft in its safe flight domain.

The display component (622) may be configured or otherwise support means for displaying information on the displays (241, 242, 215) of the cockpit according to the corrected left wing aileron position setpoint signal (435), the corrected right wing aileron position setpoint signal (436), the corrected rudder position setpoint signal (440), the corrected propeller speed setpoint signal (432), the corrected propeller pitch setpoint signal (433), the left sun-gear angular position sensor (351) signal, the right sun-gear angular position sensor (352) signal and, when applicable, signals for controlling the operation of auxiliary electric thrusters, and other flight parameters in order to mimic the displays of a multi-engine aircraft.

The resetting component (624) may be configured or otherwise support means for resetting the aircraft operation mode of the original single-engine aircraft upon receipt of a signal from the reset command. The resetting component (624) in accordance with the control law may bring back a dissymmetric behavior of the aircraft, for instance triggered by the engine failure simulation command (290), to a symmetric behavior, overriding the signals generated by the dissymmetry processing component (612) and the power control component (616) and may also operate in connection with the display component (622) to monitor the displays and return to a single-engine type of display. In flight, the resetting component (624) may monitor the return to a single-engine mode in order to prevent the aircraft exiting from its safe-flight domain. When activated before flight, the resetting component may set the aircraft in a single-engine mode and prevent the dissymmetry processing component (612) and the power control component (616) to alter the setpoints of their respective controls. The two thrust levers of the central thrust control (350) may be locked together, and the aircraft may be piloted in its nominal single-engine configuration.

The recording component (620) may be configured or otherwise support means for recording in a memory flight parameters and controls corresponding to the mimicked multi -engine aircraft for analysis and debriefing purpose, Such a memory may be a CDROM, DVDROM, memory card, memory stick or an internal memory accessible through a connection like an USB connection for instance in the cockpit. Such a memory is different than the FDR and the CVR of the aircraft, the latter recording real flight and control parameters and not simulated ones.

The output port (606) may deliver signals after processing by the dissymmetry processing component (612), the power control component (616) and the display component (622) comprising at least one of a corrected left wing aileron position setpoint signal (435), a corrected right wing aileron position setpoint signal (436), a corrected rudder position setpoint signal (440), a corrected propeller speed setpoint signal (432), a corrected propeller pitch setpoint signal (433) and signals for the operation of the auxiliary electric thrusters, when applicable, as well as signals to the displays according to the techniques and methods described herein.

The techniques and methods described herein may be adapted in some implementations to mimic the behavior of a four-engine aircraft with a single engine aircraft. According to some implementation, two central control devices (350) as described herein may be used in parallel. A left part delivering a left dissymmetry signal and a left power control signal according to the angular positions of the two left thrust levers and the same for a right part delivering a right dissymmetry signal and a right power control signal according to the angular positions of the two right thrust levers. These four signals may be conveyed to an adapted dissymmetry processing component and an adapted power control component which may process and issue a corrected left wing aileron position setpoint signal (435), a corrected right wing aileron position setpoint signal (436), a corrected rudder position setpoint signal (440), a corrected propeller speed setpoint signal (432), a corrected propeller pitch setpoint signal (433) and signals for the operation of the auxiliary electric thrusters based on an adapted control law.

It should be noted that the methods described herein describe possible implementations, and that the operations and the steps may be rearranged or otherwise modified and that other implementations are possible. Furthermore, aspects from two or more of the methods may be combined.

Aspect 1: A system for mimicking a behavior of a multi-engine aircraft with a single-engine aircraft comprising: an aircraft comprising an on-board cockpit comprising at least one control device, a main thruster and a fly-by-wire control center configured to move at least one aerodynamic surface among a rudder, a right-wing aileron and a left-wing aileron in response to an action on the at least one control device; the fly-by-wire control center being further configured to modify at least one operating parameter of the main thruster in response to an action on the at least one control device; the at least one control device comprising a central thrust control comprising two independent thrust levers, configured to issue a power control signal and a dissymmetry signal based on an average angular position and a difference in angular position between the two independent thrust levers; the fly-by-wire control center comprising at least one calculator comprising an input port configured to receive a power control signal and a dissymmetry signal, a non-volatile memory comprising a control law and a computer program configured to process the power control signal and the dissymmetry signal an to issue at least one a corrected left wing aileron position setpoint signal, a corrected right wing aileron position setpoint signal, a corrected rudder position setpoint signal, a corrected propeller speed setpoint signal, a corrected propeller pitch setpoint signal ;wherein the control law and the computer program are configured to mimic the behavior of an aircraft comprising more than one main thruster.

Aspect 2: the system of aspect 1, wherein the main thruster is a turboprop.

Aspect 3: the system of aspects 1 through 2, comprising an auxiliary electric thruster on each wing and the computer program and the control law are configured to process at least one operating parameter relating to each auxiliary electric thruster.

Aspect 4: the system of aspects 1 through 3, wherein the at least one control device comprises an engine failure simulation command configured to trigger a mimicked aircraft behavior subject to an engine failure.

Aspect 5: the system of aspects1 though 4, wherein the at least one control device comprises a reset command configured to exit a mimicked aircraft behavior.

Aspect 6: the system of aspects 1 through 5, wherein the fly-by-wire control center comprises a secondary fly-by-wire control device comprising: a database comprising the control law of a multi-engine mimicked aircraft, a memory comprising the computer program for processing signals arriving on the input port according to: a dissymmetry processing component, a power control component, a display component, a recording component, and a resetting component.

Aspect 7: the system of aspects 1 through 6, wherein the two independent thrust levers of the central thrust control are acting on a power control shaft of the main thruster via a differential gear train comprising a left sun-gear connected to a left-hand thrust lever, a right sun-gear connected to a right-hand thrust lever, a planetary gear geared with the left sun-gear and the right sun-gear and held by a planet carrier, the power control shaft being connected in rotation with the planet carrier.

Aspect 8: the system of aspects 1 through 7, wherein the planetary gear is connected in rotation with a dissymmetry shaft, an angular position of the dissymmetry shaft being set by the difference in angular positions of the two independent thrust levers and measured by a dissymmetry shaft angular sensor issuing the dissymmetry signal.

Aspect 9: the system of aspects 1 through 8, wherein the central thrust control comprises a left sun-gear angular position sensor and a right sun-gear angular position sensor and wherein the display component is configured to generate a signal towards an engine gauge display, showing a thrust power of a left engine and a thrust power of a right engine according to angular positions delivered by the left sun-gear angular position sensor and the right sun-gear angular position sensor.

Aspect 10: The system of aspects 1 to 9, wherein a recording component is configured to record timestamped positions of the left-hand thrust lever and of the right-hand thrust lever from angular positions delivered by the left sun-gear angular position sensor and the right sun-gear angular position sensor.

Aspect 11: a method for adapting a single-engine aircraft for operating like a multi-engine aircraft, implementing a system according to any aspect 1 to 10, comprising steps of: installing on the single-engine aircraft at least one supplementary fly-by-wire controlled aerodynamic surface; installing a secondary fly-by-wire control device comprising a control law and configured to control the at least one supplementary fly-by-wire controlled aerodynamic surface; installing a central thrust control comprising two independent thrust levers configured to issue a power control signal and a dissymmetry signal based on an average angular position and a difference in angular position between the two independent thrust levers; wherein the secondary fly-by-wire control device is configured to issue at least one of a corrected propeller speed setpoint signal, corrected propeller pitch setpoint signal, a corrected aileron position setpoint signal and a corrected rudder position signal from the power control signal and the dissymmetry signal.

Aspect 12: the method of aspect 11, further comprising installing auxiliary electric thrusters at wing tips of the single-engine aircraft wherein operating conditions of the auxiliary electric thrusters are controlled by the secondary fly-by-wire control device based on the power control signal and the dissymmetry signal.

Information and signals described herein may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

The various illustrative blocks and modules described in connection with the disclosure herein may be implemented or performed with a general-purpose processor, a DSP, an ASIC, an FPGA or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices (e.g., a combination of a DSP and a microprocessor, multiple microprocessors, one or more microprocessors in conjunction with a DSP core, or any other such configuration).

The functions described herein may be implemented in hardware, software executed by a processor, firmware, or any combination thereof. If implemented in software executed by a processor, the functions may be stored on or transmitted over as one or more instructions or code on a computer-readable medium. Other examples and implementations are within the scope of the disclosure and appended claims. For example, due to the nature of software, functions described herein can be implemented using software executed by a processor, hardware, firmware, hardwiring, or combinations of any of these. Features implementing functions may also be physically located at various positions, including being distributed such that portions of functions are implemented at different physical locations.

**Claims**

1. A system for mimicking a behavior of a multi-engine aircraft with a single-engine aircraft comprising:
an aircraft (102) comprising an on-board cockpit (104) comprising at least one control device (210), a main thruster (110) and a fly-by-wire control center (142, 400) configured to move at least one aerodynamic surface among a rudder (130), a right-wing aileron (122) and a left-wing aileron (121) in response to an action on the at least one control device;

the fly-by-wire control center (142, 400) being further configured to modify at least one operating parameter of the main thruster (110) in response to an action on the at least one control device;
the at least one control device comprising a central thrust control (210, 350) comprising two independent thrust levers (311, 312), configured to issue a power control signal (319) and a dissymmetry signal (329) based on an average angular position and a difference in angular position between the two independent thrust levers (311, 312);
the fly-by-wire control center (142, 400) comprising at least one calculator (410, 420 430) comprising an input port configured to receive a power control signal (459, 319) and a dissymmetry signal (469, 329), a non-volatile memory comprising a control law and a computer program configured to process the power control signal (459, 319) and the dissymmetry signal (469, 329) and to issue at least one a corrected left wing aileron position setpoint signal (435), a corrected right wing aileron position setpoint signal (436), a corrected rudder position setpoint signal (440), a corrected propeller speed setpoint signal (432), a corrected propeller pitch setpoint signal (433) ;
wherein the control law and the computer program are configured to mimic the behavior of an aircraft comprising more than one thruster.

2. The system of claim 1, wherein the main thruster (110) is a turboprop.

3. The system of claim 1, comprising an auxiliary electric thruster (151, 152) on each wing and the computer program and the control law are configured to process at least one operating parameter relating to each auxiliary electric thruster.

4. The system of claim 1, wherein the at least one control device comprises an engine failure simulation command (290) configured to trigger a mimicked aircraft behavior subject to an engine failure.

5. The system of claim 4, wherein the at least one control device comprises a reset command (291) configured to exit the mimicked aircraft behavior.

6. The system of claim 1, wherein the fly-by-wire control center (142, 400) comprises a secondary fly-by-wire device (434, 602) comprising:

a database (610) comprising the control law of a multi-engine mimicked aircraft,
a memory (614) comprising the computer program for processing signals arriving on the input port (604) according to:

a dissymmetry processing component (612),
a power control component (616),
a display component (622),
a recording component (620), and
a resetting component (624).

7. The system of claim 6, wherein the two independent thrust levers (311, 312) of the central thrust control (350) are acting on a power control shaft of the main thruster via a differential gear train comprising a left sun-gear (331) connected to a left-hand thrust lever (311), a right sun-gear (332) connected to a right-hand thrust lever (312), a planetary gear (345) geared with the left sun-gear (331) and the right sun-gear (332) and held by a planet carrier (340), the power control shaft (315) being connected in rotation with the planet carrier (340).

8. The system of claim 7, wherein the planetary gear (345) is connected in rotation with a dissymmetry shaft (325), an angular position of the dissymmetry shaft being set by the difference in angular positions of the two independent thrust levers and measured by a dissymmetry shaft angular sensor issuing the dissymmetry signal (329).

9. The system of claim 7, wherein the central thrust control (350) comprises a left sun-gear angular position sensor (351) and a right sun-gear angular position sensor (352) and wherein the display component (622) is configured to generate a signal towards an engine gauges display (215), showing a thrust power of a left engine and a thrust power of a right engine according to angular positions delivered by the left sun-gear angular position sensor (351) and the right sun-gear angular position sensor (352).

10. The system of claim 9, wherein the recording component (620) is configured to record timestamped positions of the left-hand thrust lever (311) and of the right-hand thrust lever (312) from angular positions delivered by the left sun-gear angular position sensor (351) and the right sun-gear angular position sensor (352).

11. A method for adapting a single-engine aircraft for operating like a multi-engine aircraft, comprising steps of:

    installing on the single-engine aircraft at least one supplementary fly-by-wire controlled aerodynamic surface;
    installing a secondary fly-by-wire control device (434, 602) comprising a control law and configured to control the at least one supplementary fly-by-wire controlled aerodynamic surface;
    installing a central thrust control (210, 350) comprising two independent thrust levers (311, 312) configured to issue a power control signal (319) and a dissymmetry signal (329) based on an average angular position and a difference in angular position between the two independent thrust levers;
    wherein the secondary fly-by-wire control device (434, 602) is configured to issue at least one of a corrected propeller speed setpoint signal (432), a corrected propeller pitch setpoint signal (433), corrected aileron position setpoint signals (435, 436) and a corrected rudder position signal (440) from the power control signal (459, 319) and the dissymmetry signal (469, 329).

12. The method of claim 11, further comprising installing auxiliary electric thrusters (151, 152) at wing tips of the single-engine aircraft wherein operating conditions of the auxiliary electric thrusters are controlled by the secondary fly-by-wire control device (434, 602) based on the power control signal (459, 319) and the dissymmetry signal (469, 329).

**FIG. 1**

**FIG. 2**

**FIG. 3**

**FIG. 4**

502 — Installing on the single-engine aircraft fly-by-wire controlled supplementary aerodynamic surfaces

504 — Installing a secondary fly-by-wire control device comprising a control law to control the fly-by-wire controlled supplementary aerodynamic surfaces

506 — Installing a central control device with independent thrust levers issuing a power control signal and a dissymmetry signal based on an average angular position and a difference in angular position of the two independent thrust levers

508 — installing auxiliary electric thrusters at wing tips of the single-engine aircraft

500

**FIG. 5**

604 — input    output — 606

626

608 — I/O controller

612 — Dissymetry processing component

616 — Power control component

620 — Recording component

622 — Display component

624 — Resetting component

610 — Database

614 — Memory

618 — Processor

602

600

**FIG. 6**

Europäisches
Patentamt
European
Patent Office
Office européen
des brevets

## EUROPEAN SEARCH REPORT

**Application Number**

EP 25 22 4665

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2022/309211 A1 (HARA SHUNICHIRO [JP] ET AL) 29 September 2022 (2022-09-29)<br>* paragraph [0002] *<br>* paragraph [0004] - paragraph [0005] *<br>* paragraph [0020] - paragraph [0021] *<br>* paragraph [0023] *<br>* paragraph [0028] - paragraph [0029] *<br>* paragraph [0034] *<br>* paragraph [0036] *<br>* paragraph [0039] - paragraph [0040] *<br>* paragraph [0044] *<br>* paragraph [0048] *<br>* paragraph [0063] *<br>* paragraph [0067] - paragraph [0069] *<br>* paragraph [0075] *<br>* paragraph [0100] *<br>----- | 1-12 | INV.<br>G09B9/16<br>G09B9/28<br>G09B9/44<br>G09B9/18<br><br>ADD.<br>B64C13/04 |
| A | DE 10 2021 106648 A1 (ROLLS ROYCE DEUTSCHLAND LTD & CO KG [DE]) 22 September 2022 (2022-09-22)<br>* paragraph [0007] - paragraph [0009] *<br>* paragraph [0016] *<br>* paragraph [0037] - paragraph [0038] *<br>----- | 1-12 | |
| | | | **TECHNICAL FIELDS SEARCHED (IPC)**<br><br>G09B<br>B60V<br>B64C |

The present search report has been drawn up for all claims

| Place of search | Date of completion of the search | Examiner |
|---|---|---|
| Munich | 17 April 2026 | Giemsa, Falk |

EPO FORM 1503 03.82 (P04C01)

**EP 4 765 076 A1**

## ANNEX TO THE EUROPEAN SEARCH REPORT
## ON EUROPEAN PATENT APPLICATION NO.

EP 25 22 4665

This annex lists the patent family members relating to the patent documents cited in  the above-mentioned European search report.
The members are as contained in the European Patent Office EDP file on
The European Patent Office is in no way liable for these particulars which are merely given for the purpose of information.

17-04-2026

| Patent document cited in search report | Publication date | Patent family member(s) | Publication date |
|---|---|---|---|
| US 2022309211 A1 | 29-09-2022 | JP 7616930 B2 | 17-01-2025 |
| | | JP 2022152518 A | 12-10-2022 |
| | | US 2022309211 A1 | 29-09-2022 |
| DE 102021106648 A1 | 22-09-2022 | DE 102021106648 A1 | 22-09-2022 |
| | | WO 2022194457 A1 | 22-09-2022 |

EPO FORM P0459

For more details about this annex : see Official Journal of the European Patent Office, No. 12/82

19

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021224490 A1

- WO 2008097319 A2